# EUROPEAN PATENT APPLICATION

(11) **EP 4 228 151 A1**
(43) Date of publication of application: **16.08.2023**
(21) Application number: 22868407.2
(22) Date of filing: 24.08.2022
(51) Int. Cl.: H02S 30/10, H02S 30/00, H02S 20/10

(54) **PHOTOVOLTAIC ASSEMBLY AND PHOTOVOLTAIC ASSEMBLY MOUNTING METHOD**

(30) Priority: 27.12.2021 CN 202111612343
(71) Applicant: Hengdian Group DMEGC Magnetics Co., Ltd., Jinhua, Zhejiang 322118 (CN)
(72) Inventor: LOU, Caoxin, Jinhua Zhejiang 322118 (CN); REN, Hailiang, Jinhua Zhejiang 322118 (CN); WANG, Tingting, Jinhua Zhejiang 322118 (CN); LOU, Xinchen, Jinhua Zhejiang 322118 (CN)
(74) Representative: HGF
(86) International application number: PCT/CN2022/114400
(87) International publication number: WO 2023/124144

(57) **Abstract**

Provided are photovoltaic assembly and a method for mounting the photovoltaic assembly. The photovoltaic assembly mainly includes solar panels, an upper rim, and lower rims. At least two solar panels are provided. Adjacent two of the solar panels are not in the same plane. The upper rim includes a first support portion and a second support portion. The first support portion and the second support portion support the adjacent two of solar panels, respectively. The distance between the first support portion and the second support portion gradually decreases in a first direction, facilitating forming a certain inclination angle between the first support portion and the second support portion. In this manner, the two solar panels have a certain inclination angle, thereby forming a non-planar photovoltaic module.

## Description

This application claims priority to Chinese Patent Application No. 202111612343.X filed with the China National Intellectual Property Administration (CNIPA) on Dec. 27, 2021, the disclosure of which is incorporated herein by reference in its entirety.

### TECHNICAL FIELD

The present application relates to the photovoltaic field, for example, a photovoltaic assembly and a method for mounting a photovoltaic assembly.

### BACKGROUND

With the continuous development of photovoltaic technologies, large-size crystalline silicon cells, and low-weight, flexible photovoltaic modules per unit area have received more and more attention. In a practical power generation process, it is generally needed to splice and lap photovoltaic assemblies so that multiple photovoltaic assemblies form a photovoltaic system.

However, in the process of splicing and lapping the photovoltaic modules in the existing art, usually, a single solar panel is mounted with a frame to form a photovoltaic module having a single solar panel. In this manner, the photovoltaic module is planar in shape. When the sun rises and falls from east to west in a day, the photovoltaic module in the existing art cannot receive sunlight irradiation in different directions, thereby reducing the power generation efficiency of the photovoltaic module.

### SUMMARY

The present application provides a photovoltaic assembly. In the photovoltaic assembly, a solar panel is supported through the cooperation of an upper rim and a lower rim so that the lower rim can be directly placed on the ground, thereby greatly reducing the mounting procedures of the operator, simplifying the mounting steps, and improving the work efficiency.

The present application adopts the solutions below.

The present application provides a photovoltaic assembly. The photovoltaic assembly mainly includes solar panels, an upper rim, and lower rims.

At least two solar panels are provided. Adjacent two solar panels are not in the same plane.

The upper rim includes a first support portion and a second support portion. The first support portion and the second support portion support the adjacent two solar panels, respectively. The distance between the first support portion and the second support portion gradually decreases in a first direction. The first support portion and the second support portion are integrally formed.

Each lower rim has a first clamping recess. The first clamping recess clamps one end of the solar panel away from the upper rim.

The present application also provides a method for mounting a photovoltaic assembly to simplify the mounting steps and improve the mounting efficiency.

The present application adopts the solutions below.

The method for mounting a photovoltaic assembly is configured to mount the preceding photovoltaic assembly and includes the steps below.

An upper rim, a lower rim and two side rims are selected. The upper rim, the lower rim and the two side rims are connected to form an accommodation cavity for accommodating a solar panel.

Silica gel is pasted by at least one of: pasting a silica gel material for sealing and waterproofing in a first clamping recess and a second clamping recess, or pasting a silica gel material for sealing and waterproofing in the periphery of the solar panel.

The solar panel is lifted in the axial direction of the solar panel. Then, the solar panel is placed in the accommodation cavity so that the second clamping recess is capable of clamping a side of the solar panel.

The solar panel gradually slides under gravity until the first clamping recess of the lower rim clamps one end of the solar panel away from the upper rim.

A cover plate is connected to a connector through a first fastener.

A compact is made to extend through a first through hole of the lower rim so that the compact is capable of fastening and supporting the lower rim.

### BRIEF DESCRIPTION OF DRAWINGS

FIG. 1 is a structure diagram of a photovoltaic assembly according to embodiment one of the present application.
FIG. 2 is a structure diagram of a solar panel connected to a side rim after being slightly deformed according to embodiment one of the present application.
FIG. 3 is a structure diagram of a solar panel connected to a side rim after recovering according to embodiment one of the present application.
FIG. 4 is a schematic diagram of a solar panel which has not slid down to a first clamping recess according to embodiment one of the present application.
FIG. 5 is a schematic diagram of a solar panel which has slid down to a first clamping recess according to embodiment one of the present application.
FIG. 6 is a schematic diagram illustrating that a cover plate is connected to an upper rim according to embodiment one of the present application.
FIG. 7 is a schematic diagram one illustrating that a connector is connected to a lower rim according to embodiment one of the present application.
FIG. 8 is a schematic diagram two illustrating that a connector is connected to a lower rim according to embodiment one of the present application.
FIG. 9 is a schematic diagram three illustrating that a connector is connected to a lower rim according to embodiment one of the present application.
FIG. 10 is a schematic diagram of stacking multiple photovoltaic assemblies according to embodiment one of the present application.
FIG. 11 is a schematic diagram of placing multiple photovoltaic assemblies on a tray according to embodiment one of the present application.
FIG. 12 is a flowchart of a method for mounting a photovoltaic assembly according to embodiment one of the present application.
FIG. 13 is a structure diagram of a photovoltaic assembly according to embodiment two of the present application.
FIG. 14 is a structure diagram one of an upper rim according to embodiment two of the present application.
FIG. 15 is a structure diagram two of an upper rim according to embodiment two of the present application.

### Reference list

- 100: solar panel
- 1: upper rim
- 11: first support portion
- 12: second support portion
- 13: first through slot
- 14: connector
- 15: second protrusion
- 2: lower rim
- 21: first clamping recess
- 22: first through hole
- 3: side rim
- 31: second clamping recess
- 4: cover plate
- 41: first fastener
- 42: first protrusion
- 5: compact
- 51: second fastener
- 52: second through hole
- 6: tray

### DETAILED DESCRIPTION

The solutions of the present application are described hereinafter in conjunction with drawings and embodiments.

In the description of the present application, unless otherwise expressly specified and limited, the term "connected to each other", "connected" or "fixed" is to be construed in a broad sense, for example, as fixedly connected, detachably connected, or integrated; mechanically connected or electrically connected; directly connected to each other or indirectly connected to each other via an intermediary; or internally connected between two elements or interaction relations between two elements. For those of ordinary skill in the art, meanings of the preceding terms can be understood according to situations in the present application.

In the present application, unless otherwise expressly specified and limited, when a first feature is described as "on" or "below" a second feature, the first feature and the second feature may be in direct contact or be in contact via another feature between the two features instead of being in direct contact. Moreover, when the first feature is described as "on", "above" or "over" the second feature, the first feature is right on, above, or over the second feature or the first feature is obliquely on, above, or over the second feature, or the first feature is simply at a higher level than the second feature. When the first feature is described as "under", "below" or "underneath" the second feature, the first feature is right under, below or underneath the second feature or the first feature is obliquely under, below or underneath the second feature, or the first feature is simply at a lower level than the second feature.

In the description of this embodiment, the orientation or position relationships indicated by terms "above", "below", "right", "left" and the like are based on the orientation or position relationships shown in the drawings, merely for ease of description and simplifying an operation, and these relationships do not indicate or imply that the referred device or element has a specific orientation and is constructed and operated in a specific orientation. In addition, the terms "first" and "second" are used only to distinguish between descriptions and have no special meaning.

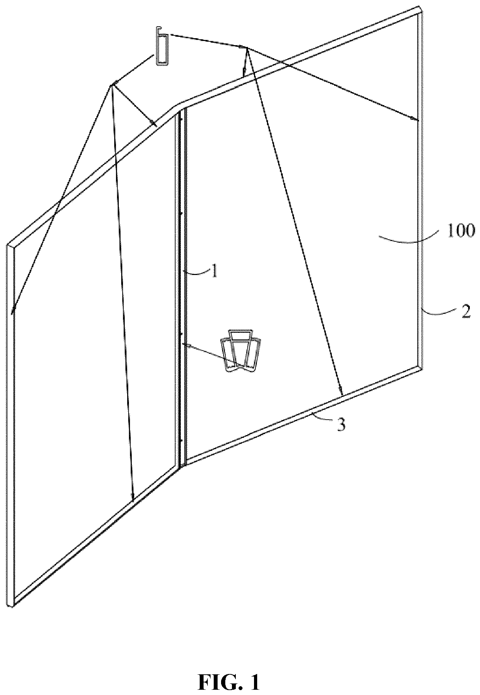

As shown in FIGS. 1 to 5, this embodiment provides a photovoltaic assembly. The photovoltaic assembly mainly includes solar panels 100, an upper rim 1, and lower rims 2. In this embodiment, at least two solar panels 100 are provided. Adjacent two solar panels 100 are not in the same plane so that each independent solar panel 100 can receive sunlight irradiation from different directions. Two solar panels 100 are described in this embodiment. The upper rim 1 includes a first support portion 11 and a second support portion 12. The first support portion 11 and the second support portion 12 support the adjacent two solar panels 100, respectively. The distance between the first support portion 11 and the second support portion 12 gradually decreases in a first direction. The first support portion 11 and the second support portion 12 are integrally formed. This can facilitate forming a certain tilt angle by the first support portion 11 and the second support portion 12. In this manner, the two solar panels 100 also have a certain tilt angle, thereby forming a non-planar photovoltaic module. It is to be noted that neither the first support portion 11 nor the second support portion 12 in this embodiment is provided with the second protrusion 15, thereby facilitating mounting the solar panel 100.

Optionally, each lower rim 2 has a first clamping recess 21. The first clamping recess 21 clamps one end of the solar panel 100 away from the upper rim 1. The lower rim 2 can support the solar panel 100 to a certain extent. A first end of the lower rim 2 abuts the external compact 5 or the ground. A second end of the lower rim 2 is provided with the first clamping recess 21. The first clamping recess 21 clamps the solar panel 100, thereby improving the stability and reliability of the connection between the lower rim 2 and the solar panel 100. To facilitate processing and batch production, the lower rim 2 and a side rim 3 have consistent structures in this embodiment.

Referring to FIGS. 1 to 5, in this embodiment, the photovoltaic assembly includes side rims 3. Each side rim 3 is disposed between the upper rim 1 and the lower rim 2 and connected to the upper rim 1 and the lower rim 2. The side rim 3 is provided with a second clamping recess 31. The second clamping recess 31 clamps a side of the solar panel 100. The side rim 3 can improve the protective effect on the side of the solar panel 100. The second clamping recess 31 can improve the reliability and stability of the connection between the side rim 3 and the solar panel 100. In this manner, the photovoltaic assembly in this embodiment only needs 7 rims for mounting the two solar panels 100. That is, one upper rim 1, two lower rims 2, and four side rims 3 enclose two accommodation cavities for accommodating the solar panels 100. Then, the two solar panels 100 are placed in the corresponding accommodation cavities. That is, the two solar panels 100 are assembled into a non-planar photovoltaic assembly.

Apart of the photovoltaic assemblies are non-planar photovoltaic assemblies in the existing art. However, this non-planar photovoltaic assembly is formed by securing two planar photovoltaic assemblies through parts such as bolts. During the mounting process, an operator is needed to mount the two planar photovoltaic assemblies obliquely. Such a mounting mode needs to put a bracket up and secures four corners of each photovoltaic assembly separately, making the mounting process cumbersome and complicated, and reducing the mounting efficiency of the non-planar photovoltaic assembly.

Compared with the existing art, the photovoltaic assembly in this embodiment is simple in structure and easy to process and mount. Seven rims can enclose two accommodation cavities for accommodating the solar panels 100, thereby saving the number of rims and consumables. The upper rim 1 and the lower rim 2 cooperate to support the solar panel 100 so that the lower rim 2 can be directly placed on the ground, thereby greatly reducing the mounting procedures of the operator, simplifying the mounting steps, and improving the work efficiency. Meanwhile, the structure of the photovoltaic assembly in this embodiment can effectively reduce the difficulty of replacing the solar panel 100.

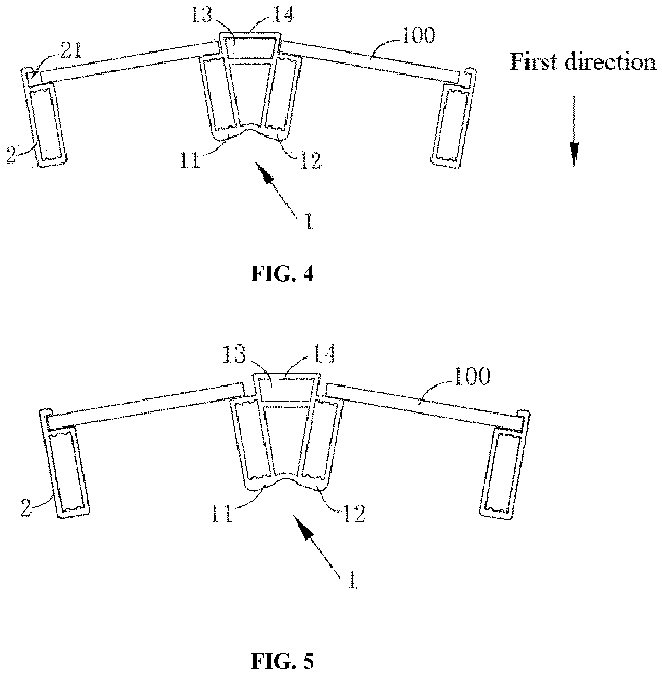

As shown in FIGS. 4 to 5, in this embodiment, the photovoltaic assembly further includes a connector 14. A first end of the connector 14 is fastened to the first support portion 11. A second end of the connector 14 is fastened to the second support portion 12. Optionally, in the first direction, the connector 14 is higher than the solar panel 100. The connector 14 can improve the mechanical load strength of the first support portion 11 and the second support portion 12 and prolong the service life of the upper rim 1. Optionally, in this embodiment, multiple connectors 14 may also be provided so that the mechanical load strength of the upper rim 1 may be improved. To improve the processing efficiency, in this embodiment, the connector 14 and the first support portion 11 and the second support portion 12 are selected and integrally formed, avoiding the risk of stress concentration at the joint of the connector 14 and the upper rim 1 and the joint of the connector and the lower rim 2. The connector 14, the first support portion 11 and the second support portion 12 enclose to form a first through slot 13. The first through slot 13 can reduce the weight of the upper rim 1, saving the consumables and costs.

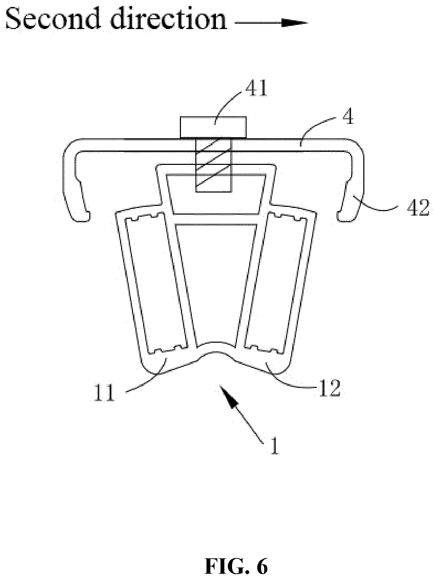

As shown in FIG. 6, in this embodiment, the photovoltaic assembly also includes a cover plate 4 disposed on the connector 14. The length of the cover plate 4 is greater than the length of the connector 14 in the second direction so that a part of the cover plate 4 can abut the solar panel 100. The cover plate 4 can improve the mechanical load strength of the photovoltaic assembly. Meanwhile, the cover plate 4 can prevent foreign objects such as rain, snow, and dust from entering the upper rim 1, thereby improving the reliability and stability of the photovoltaic assembly. The cover plate 4 is provided with a first protrusion 42. The first protrusion 42 can abut the solar panel 100. The arrangement of the first protrusion 42 can improve the stability of the fastening of the cover plate 4 to the solar panel 100. To reduce the rigid contact between the first protrusion 42 and the solar panel 100, the operator may also sleeve a flexible silicone liner to the first protrusion 42. The details are not repeated herein.

Optionally, referring to FIG. 6, the photovoltaic assembly also includes a first fastener 41 connected between the cover plate 4 and the connector 14. The first fastener 41 may be a part such as a bolt, a screw or a rivet. In this embodiment, the selection and connection mode of the fastener only need to strengthen the stable connection between the cover plate 4 and the connector 14.

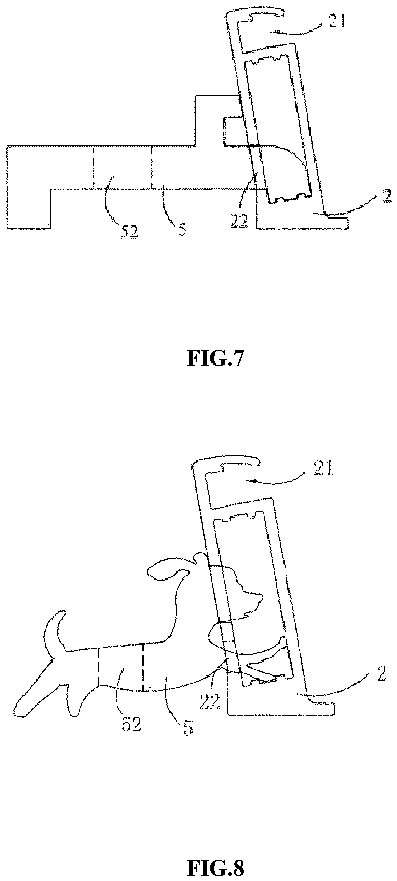

As shown in FIGS. 7 to 9, in this embodiment, the photovoltaic assembly also includes a compact 5. The lower rim 2 is provided with a first through hole 22. A part of the compact 5 can extend through the first through hole 22 and supports the lower rim 2. In this manner, the supporting effect of the compact 5 on the lower rim 2 can be improved, thereby improving the stability of the photovoltaic assembly. In other embodiments of the present application, the operator can select a compact 5 with different shapes according to actual requirements, thereby improving the aesthetic appearance of the compact 5. As shown in FIGS. 7 to 8, the compact 5 may be configured to be in the shape of a "faucet" or a "small animal". However, it is needed to ensure that the compact 5 can be stably connected to the ground. The shape of the compact 5 is not limited in this embodiment.

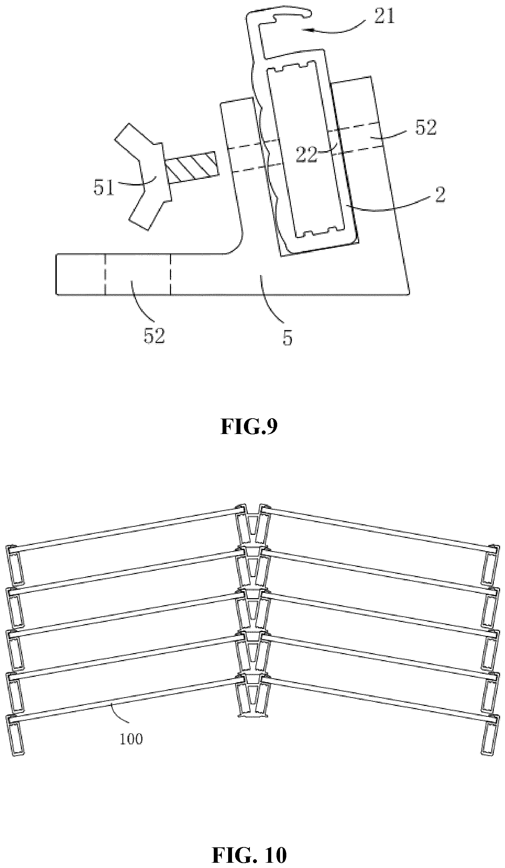

Optionally, as shown in FIG. 9, the photovoltaic assembly also includes a second fastener 51. The compact 5 is provided with a second through hole 52. A part of the second fastener 51 extends through the first through hole 22 and the second through hole 52. In this manner, the second fastener 51 can improve the stability of the connection between the lower rim 2 and the compact 5. The second fastener 51 may be a part such as a bolt, a screw or a rivet as long as the connection between the compact 5 and the lower rim 2 can be strengthened. The selection and connection mode of the fastener are not limited in this embodiment.

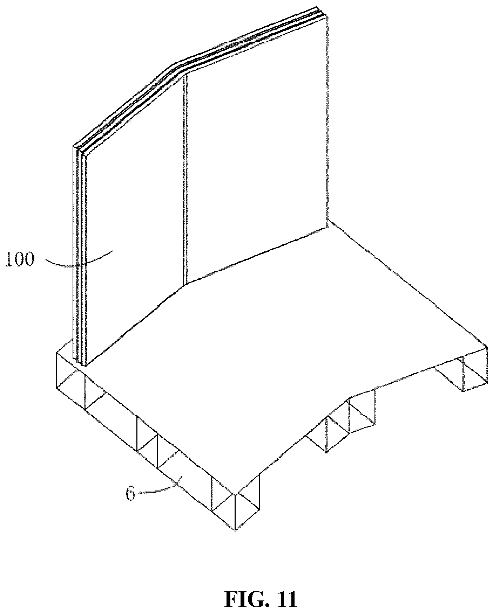

As shown in FIGS. 10 to 11, the photovoltaic assemblies in this embodiment have two placement modes: stacking and packaging on a tray 6. With respect to the photovoltaic assembly in the related art, it is needed to consider the stacking effect of different planes between the photovoltaic assemblies in the stacked state in this embodiment. The upper surface of the upper rim 1 and the lower surface of the upper rim 1 in this embodiment can be fit against each other, thereby improving the stability after the photovoltaic assemblies are stacked. When the tray 6 is used for packaging, the structure of the tray 6 needs to be fitted with the photovoltaic assemblies. After the photovoltaic assemblies are placed in sequence, the photovoltaic assemblies can be fastened to the tray 6 by a packing strap. In addition, for a container having a fixed size, it is needed to fully consider the matching of the size of the tray 6 with the container, so as to reduce the transportation cost.

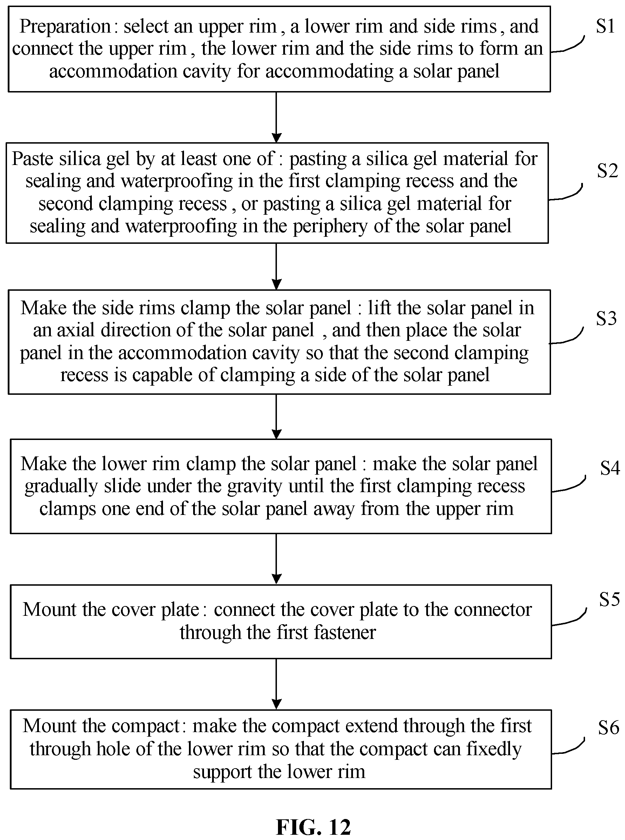

As shown in FIG. 12, this embodiment also provides a method for mounting a photovoltaic assembly which is used for mounting the photovoltaic assembly. The method mainly includes the steps below.

In S1, preparation: an upper rim 1, a lower rim 2 and side rims 3 are selected and connected to form an accommodation cavity for accommodating a solar panel 100. For example, one upper rim 1, two lower rims 2 and four side rims 3 are selected to enclose two accommodation cavities for placing solar panels 100. Optionally, the side rims 3 may be connected to the upper rim 1 and the lower rims 2 in the manner of adopting a corner code or clamping, thereby improving the connection fastness.

In S2, silica gel is pasted by at least one of: pasting a silica gel material for sealing and waterproofing in the first clamping recess 21 and the second clamping recess 31, or pasting a silica gel material for sealing and waterproofing in the periphery of the solar panel 100. Pasting the silica gel can improve the fastness of the connection between the solar panel 100 and the side rims 3 and the lower rims 2 so that when the solar panels 100 are placed in the accommodation cavities, the solar panels 100 can be bonded to the silica gel, thereby improving the reliability and stability of the photovoltaic assembly.

In S3, the solar panel 100 clamps the side rims 3. The solar panel 100 is lifted in the axial direction of the solar panel 100. Then, the solar panel 100 is placed in the accommodation cavity so that the second clamping recess 31 is capable of clamping a side of the solar panel 100.

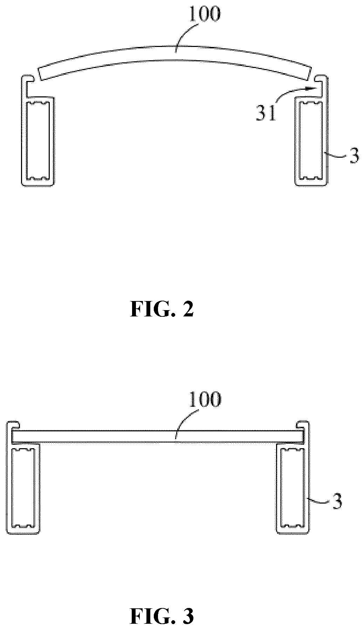

Exemplarily, as shown in FIG. 2, when an operator lifts the solar panel 100 along the axis of the solar panel 100, the solar panel 100 is micro-deformed under gravity, and two sides of the solar panel 100 may be bent downward away from the axis of the solar panel 100, thereby reducing the length of the solar panel 100. For example, the length of the solar panel 100 is 1500 mm when the solar panel 100 is laid flat. The length of the solar panel 100 is shortened to 1480 mm after the solar panel 100 is lifted and micro-deformed. It is to be noted that the length of the solar panel 100 is not larger than the length of the two side rims 3 in any one of the accommodation cavities after the solar panel 100 is lifted and micro-deformed so that the solar panel 100 can be smoothly placed in the accommodation cavity and thereafter is elastically reset and recover to the original state, thereby enabling the side of the solar panel 100 to be clamped by the second clamping recess 31 on the side rim 3.

In S4, the solar panel 100 is clamped by the lower rim 2. The solar panel 100 gradually slides under the gravity until the first clamping recess 21 clamps one end of the solar panel 100 away from the upper rim 1. During the sliding of the solar panel 100, the solar panel 100 can always abut the upper rim 1, thereby ensuring the reliability and stability of the photovoltaic assembly.

In one embodiment, when the step S4 is performed, the height of the upper rim 1 is larger than the height of the lower rim 2 so that the solar panel 100 can gradually slide under the gravity until the first clamping recess 21 clamps the one end of the solar panel 100 away from the upper rim 1.

In S5, the cover plate 4 is mounted. The cover plate 4 is connected to the connector 14 through the first fastener 41.

In S6, the compact 5 is mounted. The compact 5 extends through the first through hole 22 of the lower rim 2 so that the compact 5 can fixedly support the lower rim 2. To improve the stability of the connection between the compact 5 and the lower rim 2, the operator may also open the second through hole 52 on the compact 5, and then a part of the second fastener 51 extends through the first through hole 22 and the second through hole 52, thereby improving the stability of the connection between the lower rim 2 and the compact 5 through the second fastener 51.

In one embodiment, the present application provides a method for mounting a photovoltaic assembly that has simple process steps so that the mounting process can be reduced, thereby improving the mounting efficiency of the photovoltaic assembly.

### Embodiment two

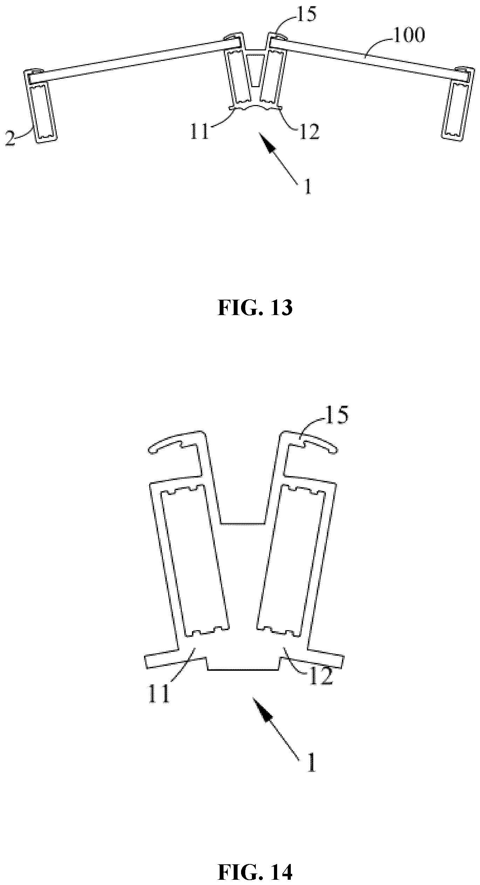

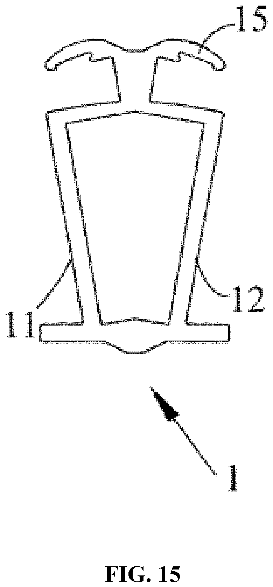

As shown in FIG. 13, this embodiment provides a photovoltaic assembly that differs from the photovoltaic assembly in embodiment one in that an upper rim 1 in this embodiment is provided with second protrusions 15. That is, one end of a first support portion 11 facing a solar panel 100 and one end of a second support portion 12 facing the solar panel 100 are both provided with a second protrusion 15 so that the fastness of the connection between the upper rim 1 and solar panels 100 can be improved. To improve the strength of the upper rim 1, the second protrusions 15, the first support portion 11, and the second support portion 12 in this embodiment are all integrally formed. As shown in FIGS. 14 to 15, the upper rim 1 in this embodiment can use different amounts of consumables and is configured in different shapes so that the upper rim 1 can bear different mechanical load strengths and can be applied to the solar panels 100 of different weights, thereby improving the flexibility and applicability of the photovoltaic assembly.

Other structures in this embodiment are the same as those in embodiment one. The details are not repeated herein.

This embodiment also provides a method for mounting a photovoltaic assembly, which is used for mounting the preceding photovoltaic assembly. The method mainly includes the steps below.

In S 1, silica gel is pasted by at least one of: pasting a silica gel material for sealing and waterproofing in the first clamping recess 21 and the second clamping recess 31, or pasting a silica gel material for sealing and waterproofing in the periphery of the solar panel 100.

In S2, two side rims 3 clamp sides of the solar panel 100.

In S3, the lower rim 2 clamps one end of the solar panel 100 away from the upper rim 1, and then the upper rim 1 clamps the solar panel 100 so that the solar panel 100 can be stably connected to the upper rim 1 and the lower rim 2 with the adhesion of the silica gel.

In S4, the compact 5 is mounted: The compact 5 extends through the first through hole 22 of the lower rim 2 so that the compact 5 can fixedly support the lower rim 2. To improve the stability of the connection between the compact 5 and the lower rim 2, the operator may also open the second through hole 52 on the compact 5, and then a part of the second fastener 51 extends through the first through hole 22 and the second through hole 52, thereby improving the stability of the connection between the lower rim 2 and the compact 5 through the second fastener 51.

The method for mounting a photovoltaic assembly in this embodiment can omit the mounting of the cover plate 4, thereby simplifying the mounting steps, reducing the use of consumables, saving the costs, and improving the mounting efficiency.

## Claims

1. A photovoltaic assembly, comprising:
solar panels (100), wherein at least two solar panels (100) are provided, adjacent two of the solar panels (100) are not in a same plane;
an upper rim (1) comprising a first support portion (11) and a second support portion (12), wherein the first support portion (11) and the second support portion (12) support the adjacent two of the solar panels (100) respectively, a distance between the first support portion (11) and the second support portion (12) gradually decreases in a first direction, and the first support portion (11) and the second support portion (12) are integrally formed; and
lower rims (2) each having a first clamping recess (21), wherein the first clamping recess (21) clamps one end of one of the solar panels (100) away from the upper rim (1).

2. The photovoltaic assembly according to claim 1, wherein the photovoltaic assembly comprises side rims (3), wherein each of the side rims (3) are disposed between the upper rim (1) and a respective one of the lower rims (2), and each of the side rims (3) are connected to the upper rim (1) and a respective one of the lower rims (2).

3. The photovoltaic assembly according to claim 2, wherein each of the side rims (3) is provided with a second clamping recess (31) clamping a side of a respective one of the solar panels (100).

4. The photovoltaic assembly according to claim 1, wherein the upper rim (1) further comprises a connector (14), wherein a first end of the connector (14) is fastened to the first support portion (11), and a second end of the connector (14) is fastened to the second support portion (12).

5. The photovoltaic assembly according to claim 4, wherein the connector (14), the first support portion (11), and the second support portion (12) are integrally formed, and the connector (14), the first support portion (11), and the second support portion (12) enclose to form a first through slot (13).

6. The photovoltaic assembly according to claim 4, further comprising:
a cover plate (4) disposed on the connector (14), wherein a length of the cover plate (4) is greater than a length of the connector (14) in a second direction so that a part of the cover plate (4) is capable of abutting the solar panel (100).

7. The photovoltaic assembly according to claim 6, further comprising:
a first fastener (41) connected between the cover plate (4) and the connector (14).

8. The photovoltaic assembly according to claim 1, further comprising:
a compact (5), wherein one of the lower rims (2) is provided with a first through hole (22), and a part of the compact (5) is capable of extending through the first through hole (22) and supporting one of the lower rims (2).

9. The photovoltaic assembly according to claim 8, further comprising:
a second fastener (51), wherein the compact (5) is provided with a second through hole (52), and a part of the second fastener (51) extends through the first through hole (22) and the second through hole (52).

10. A method for mounting a photovoltaic assembly, the method being configured to mount the photovoltaic assembly of any one of claims 1 to 9 and comprising:
selecting an upper rim (1), a lower rim (2) and two side rims (3), and connecting the upper rim (1), the lower rim (2) and the two side rims (3) to form an accommodation cavity for accommodating a solar panel (100);
pasting silica gel by at least one of: pasting a silica gel material for sealing and waterproofing in a first clamping recess (21) and a second clamping recess (31), or pasting a silica gel material for sealing and waterproofing in the periphery of the solar panel (100);
lifting the solar panel (100) in an axial direction of the solar panel (100), and then placing the solar panel (100) in the accommodation cavity so that the second clamping recess (31) is capable of clamping a side of the solar panel (100), and the solar panel (100) gradually slides under gravity until the first clamping recess (21) of the lower rim (2) clamps one end of the solar panel (100) away from the upper rim (1);
connecting a cover plate (4) to a connector (14) through a first fastener (41); and
making a compact (5) extend through a first through hole (22) of the lower rim (2) so that the compact (5) is capable of fastening and supporting the lower rim (2).
